# EUROPEAN PATENT SPECIFICATION

(11) **EP 1 589 270 B1**
(45) Date of publication and mention of the grant of the patent: **24.02.2010**
(21) Application number: 04425275.7
(22) Date of filing: 20.04.2004
(51) Int. Cl.: F16L 11/127, F16L 9/12

(54) **Multi-layer duct**
Mehrschichtige Leitung
Conduit multi-couches

(43) Date of publication of application: 26.10.2005
(73) Proprietor: Salver S.p.A., 00135 Roma (IT)
(72) Inventor: Innocente, Francesco, 73015 Salice Salentino LE (IT); Capoccello, Daniele, 73015 Salice Salentino (IT)
(74) Representative: Leone, Mario

(56) References cited:
- EP-A- 0 882 924
- EP-A- 1 364 772
- WO-A-02/087869
- US-A1- 2004 031 532

## Description

The present invention refers to a multi-layer duct for air distribution in air conditioning systems, in particular, yet not exclusively, for aircraft vehicles.

The duct manufacturing technology that uses the overlapping of layers of material to make up the walls of the duct has witnessed the taking hold of the advanced composite materials, in the form of the so-called prepreg, provided in rolls and/or sheets of the desired thickness.

For 'prepreg' (preimpregnated composite material) it is meant hereinafter a fabric, unidirectional tape, mats, strands, non-woven fabric, etc., impregnated with polymer matrices consisting of resins of various nature, e.g. thermosetting epoxy resins, phenolic resins, polyesters, etc., provided in the form of rolls and/or laminated sheets. The fibres forming said preimpregnated base, i.e., the fabric, etc. may be the most varied to carry out structural tasks, conducting electricity, etc.

This material is capable of assuming, at the initial step of forming, any shape required to the duct; from the simplest one, of a cylinder-shaped piping having a circular or elliptical section, to the more complex ones, e.g., manifolds, joints, connections and the like.

The presence of structural fibres, e.g. glass fibres, aramid fibres, rayon fibres or Carbon fibres provided in the form of fabric, non-woven fabric or other, gives to the duct the required mechanical properties. However, the use of such materials requires great care with regard to the fluid- (air-) tightness of the duct.

In fact, the layers of preimpregnated fibres exhibit a porosity that, besides on the kind of thermosetting resin and impregnating system, substantially depends on the number of layers used and/or on the related thickness. Therefore, in order to attain the required fluid-tightness it is necessary to increase the thicknesses with the obvious consequence of the increase in the weight per unit surface area (expressed in g/m² of external surface of the duct). However, it is understood that, especially in aeronautical applications, it is necessary to keep the weight of each component as low as possible.

Hence, the manufacturing process may provide the application of a layer of non-reinforced thermosetting resin, i.e. one not based on a preimpregnated base, usually a liquid-state phenolic resin. This application remarkably complicates the process, as it is not possible to apply the required resin thickness in a single step. In fact, such a resin can be applied in a minimum thickness only, such as to keep its stability and integrity during the subsequent step of annealing that completes the applying. Therefore, there are required plural resin-applying cycles, each alternating with a tightness test.

The tightness test serves to check that the duct, at the rated operating gauge pressure or at higher pressures, exhibits the required tightness. In case of a negative response, a further layer of resin is applied with the related step of annealing.

An exemplary application of the present technology is described in EP 1,364,772 A1, limited to the use of glass and Carbon fibres.

Hence, the technical problem underlying the present invention is represented by the need to obtain ducts as light-weight as possible, exhibiting adequate performances in terms of fluid tightness and through a simplified process.

Besides these requisites, further operating conditions should be satisfied, such as the structural consistency of the multi-layer duct, the low noise associated to the flow of fluid and the optional electrical conductivity along the duct, to prevent the accumulation of electrostatic charges generated by friction of the fluid (air) against the inner walls of the duct.

This problem is solved by a multi-layer duct as abovespecified, made of an overlapping of layers comprising:
* one substantially fluid tight polymer film, defining the inner wall of the duct;
* at least one stiffening structural layer, formed by a sheet of structural fibres preimpregnated with thermosetting resin, enveloping said polymer film;
* one or more optional additional functional layers of prepreg with structural and/or functional fibres.

For stiffening structural layer it is meant a layer capable of providing the required structural properties to the duct:

For structural fibre preimpregnated with a polymer matrix or a thermosetting resin it is meant a fibre capable of conferring said structural properties. Exemplary structural fibres are glass fibre, rayon viscose fibre, Carbon fibre, aramid fibre, etc.

For functional fibre preimpregnated with a polymer matrix or a thermosetting resin it is meant a fibre capable of conferring further properties like, e.g., electric conductivity, electrical insulation, thermal insulation, optical transmission, etc., to the resin layer.

Among exemplary electrically conductive fibres there may be mentioned the Carbon fibres, excellently carrying out also structural functions as it is well-known, and the fibres of Boron, Tungsten, alumina, Copper, other conductive metals, etc. It is proposed that the same fibre may concomitantly carry out structural and functional tasks. Hence, the functional tasks could be inherent to said stiffening layer.

Lastly, among the exemplary electrically insulating fibres there may be mentioned the glass fibres and the aramid fibres.

The impregnating resin may be a phenolic, polyester, epoxy, polyimide resin, etc.

A preferred embodiment of the duct according to the invention has an overlapping of layers comprising:
* one substantially fluid-tight polymer film, defining the inner wall of the duct;
* at least one stiffening structural layer, formed by a sheet of structural fibres preimpregnated with thermosetting resin, enveloping said polymer film;
* at least one first electrically conductive functional layer, formed by a sheet comprising conductive fibres preimpregnated with thermosetting resin; and
* at least one second electrically insulating functional layer, formed by a sheet comprising appropriate insulating functional fibres, preimpregnated with thermosetting resin.

The main advantage of the multi-layer duct as defined above lies in exhibiting reduced thicknesses, and therefore a limited weight per unit surface area (areal weight), satisfying the requisites of air-tightness. Concomitantly, the application of additional layers of fluid-tightening resin becomes superfluous.

According to the same inventive concept, the present invention provides a process for the manufacturing of a duct as abovespecified, comprising the steps of:
* arranging in sequence, on a mandrel of appropriate shape and section, one substantially fluid tight polymer film, defining the inner wall of the duct, at least one stiffening structural layer, formed by a sheet of structural fibres preimpregnated with thermosetting resin, enveloping said polymer film, and one or more optional functional layers with additional structural and/or functional fibres, preimpregnated with a thermosetting resin;
* extracting air and other gases or volatile substances among said layers by vacuum application;
* subjecting said layers to heating at a preset temperature and for a preset period of time, holding said vacuum application to extract gases or any volatile substances generated because of the heating;
* cooling said layers; and
* extracting or otherwise removing said mandrel.

According to a preferred embodiment of said process, the deposition of said polymer film on the mandrel is preceded by the applying on the mandrel of a detaching agent, e.g. a polyvinyl alcohol (PVA) resin or a polyester applied by spraying, which makes it easier to remove the mandrel, yet contributes to the decrease of the internal roughness of the duct, in particular in the case in which the mandrel is of a disposable, non-metallic type.

The present invention will hereinafter be described according to a preferred embodiment thereof, given by way of a non-limiting example and with reference to the annexed drawings, wherein:
* figure 1 is a partially sectional perspective view of a multi-layer duct according to the invention;
* figure 2 is a perspective view of a supporting member applied to the multi-layer duct according to the invention; and
* figure 3 is a schematic view of a detail of the duct of figure 1.

With reference to the figures, a multi-layer duct, in particular for aeronautical applications, is indicated by D and it is depicted in order to display the layers making it up.

These layers are coaxially arranged and will be described from the inside of the duct, where the passage of airflow is envisaged, to the outside of the duct. The shape of the depicted duct section is substantially circular, yet it is proposed that the shape of the duct and of its cross section may be any one.

The duct D comprises a substantially fluid tight polymer film 1, defining the inner wall of the duct. Advantageously, yet not exclusively, it is made of a flexible polymer material that may be wound around a mandrel in the first duct manufacturing step.

The polymer material may be a polyvinyl fluoride (PVF), a polytetrafluoride (PTF, PTFE), a phenolic or polyphenolic, polysulphonic and polyimidic material. Preferably, such a material is selected from a group comprising polyvinyl fluoride (PVF) and polytetrafluoride (PTF, PTFE).

According to a preferred embodiment, such a polymer film is produced out of Tedlar™ of a thickness ranging from 15 to 75 µm, provided in the form of extruded sheet with an adhesive surface facing the successive layers of prepreg that will be described hereinafter, the adhesive surface being coated with a polyester-based, epoxy-based or the like adhesive layer.

According to the present embodiment, the duct D further comprises a structural stiffening structural layer 2, formed by a layer of structural fibres preimpregnated with a resin, enveloping said polymer film 1.

The stiffening structural layer 2 could exhibit a weight per unit surface area ranging from 50 to 150 g/m², and be, e.g., made of a non-woven fabric of rayon viscose fibres in phenolic resin.

The duct D further comprises a first electrically conductive functional layer 3, formed by a sheet of fabrics comprising preimpregnated electrically conductive fibres.

Advantageously, said first functional layer 3 could carry out structural tasks as well. In the present embodiment, said first layer 3 is made of a layer of fabric containing Carbon fibres, preimpregnated with phenolic resin. The weight per unit surface area may range from 250 to 400 g/m². Alternatively, there could be used hybrid fabrics of aramid fibres and Carbon fibres, or even hybrid fabrics of glass fibres and Carbon fibres with a weight per unit surface area substantially comprised in the abovementioned range.

The duct D further comprises a second electrically insulating functional layer 4, formed by a sheet of appropriate insulating functional fibres, in the form of prepreg.

According to the present embodiment, said second functional layer 4 is made of a layer of minimal thickness of glass fibre or aramid fibre, preimpregnated with phenolic resin. The weight per unit surface area of this layer could be of >60 g/m², e.g. of 40 g/m².

The thickness of this overlapping of layers could yield a very reduced overall thickness of the duct, ranging from 0.50 to 0.750 mm, and an overall weight per unit surface area of about 480 g/m², i.e. about half the value yielded by traditional techniques.

Lastly, the duct D has an outer layer 5 of a thermally insulating material, provided in the form of a polyimide mat, that is added at the end of the manufacturing process, or at installation.

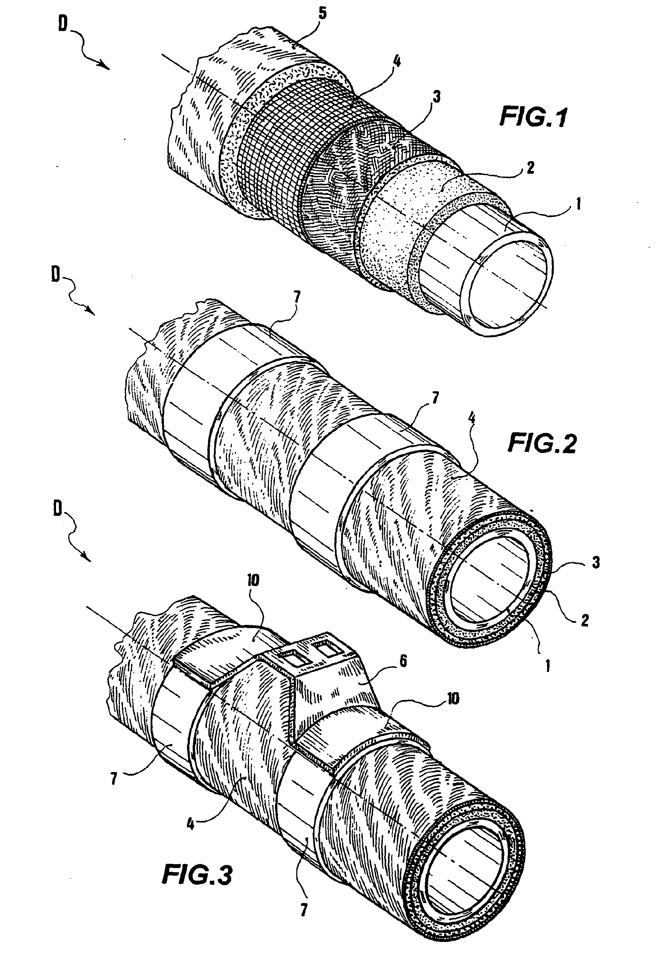

With reference to figures 2 and 3, it is described a support 6 of the duct D that could have any one shape, comprising a pair of curved flaps 10, adhering to the duct D.

At said flaps 10, the duct D comprises a reinforcing layer 7 in the form of a strip surrounding the periphery of the duct D. Said local reinforcements, suitably spaced along the ducts, are required in particular for ducts operating in depression, i.e. with a negative gauge pressure.

Advantageously, in order to exploit to the utmost the compatibility among similar materials, the outermost functional layer, in this case the second electrically insulating functional layer 4, the reinforcing layer 7 and the support 6 will be made with the same structural fabrics preimpregnated with phenolic resin.

It is understood that all the mentioned components fulfil the FTS requisites on non-flammability for aeronautical and non-aeronautical applications.

With the abovedescribed duct several advantages are attained, summarised hereinafter:
* drastic reduction of the weight per unit surface area with respect to other solutions currently adopted;
* increase of the tension stiffness factor, increase of the mean flexural strength, compression strength and tensile strength;
* improvement of the impact strength;
* dissipation of the electrostatic charges generated by the transit of the air (fluid) flow; and
* low level of noise associated to the transit of fluid, implying a substantial reduction of the load losses through the duct.

The latter advantage is provided by the use of said polymer film that, on the position in which it is inserted, not only provides the duct with the required air-tightness, but also reduces the internal surface roughness thereof, down to a maximum of 10 µm.

This peculiarity is further improved, above all in the case of use of non-metallic disposable mandrels, with the use of said detaching agent in the process as defined and described above.

Moreover, in the process it is eliminated the use of liquid-state phenolic resins, to be spray-applied with the relevant elaborate precautions. In addition, it is ensured an improved repeatability of the product, which is no more affected anymore by any localized variations in porosity of the overlapped layers.

To the abovedescribed multi-layer duct and manufacturing process a person skilled in the art, in order to satisfy further and contingent needs, may effect several further modifications and variants, all however encompassed by the protective scope of the present invention, as defined by the appended claims.

## Claims

1. A multi-layer duct (D) for air distribution in air conditioning systems, in particular, yet not exclusively, for aircraft vehicles, made of an overlapping of layers comprising:
* one substantially fluid tight polymer film (1) defining the inner wall of the duct **and in contact with the internal air** flow; and
* at least one stiffening structural layer (2, 3), formed by a sheet of structural fibres pre-impregnated with thermosetting resin, enveloping said polymer film,
wherein:
* at least one first electrically conductive functional layer (3), formed by a sheet comprising conductive fibres pre-impregnated with thermosetting resin; and
* at least one second electrically insulating functional layer (4), formed by a sheet comprising appropriate insulating functional fibres, pre-impregnated with thermosetting resin **enveloping said at least one first electrically conductive functional layer.**

2. The multi-layer duct (D) according to claim 1, wherein said structural fibres pre-impregnated with a resin are glass fibres, rayon viscose fibres, Carbon fibres and/or aramid fibres.

3. The multi-layer duct (D) according to claim 1, wherein said electrically conductive functional fibres are fibres of Carbon, Boron, Tungsten, Alumina, Copper and/or electrically conductive metals.

4. The multi-layer duct (D) according to claim 1, wherein said electrically insulating fibres are glass fibres and/or aramid fibres.

5. The multi-layer duct (D) according to claim 1, wherein said impregnating resin is a phenolic, polyester, epoxy and/or a polyimide resin.

6. The multi-layer duct (D) according to claim 5, wherein said impregnating resin is a phenolic resin.

7. The multi-layer duct (D) according to claim 1, wherein in said overlapping the layers (1, 2, 3, 4, 5) are substantially coaxially arranged.

8. The multi-layer duct (D) according to claim 1, wherein said polymer film (1) is made of a flexible polymer material.

9. The multi-layer duct (D) according to claim 1, wherein said polymer film (1) is made of a polymer material selected from a group comprising polyvinyl fluoride (PVF), polytetrafluoride (PTF, PTFE), phenolic or polyphenolic, polysulphonic and polyimidic material.

10. The multi-layer duct (D) according to claim 9, wherein said polymer material is selected from a group comprising polyvinyl fluoride (PVF) and polytetrafluoride (PTF, PTFE).

11. The multi-layer duct (D) according to claim 10, wherein said polymer material is Tedlar™ of a thickness ranging from 15 to 75 µm.

12. The multi-layer duct (D) according to claim 11, wherein said polymer material is provided in the form of extruded sheet with an adhesive surface facing the successive layers.

13. The multi-layer duct (D) according to claim 12, wherein said adhesive layer is polyester-based, epoxy-based or the like.

14. The multi-layer duct (D) according to claim 1, wherein said stiffening structural layer (2) has a weight per unit surface area ranging from 50 to 150 g/m².

15. The multi-layer duct (D) according to claim 1, wherein said stiffening structural layer (2) is made of a non-woven fabric of rayon viscose fibres in phenolic resin.

16. The multi-layer duct (D) according to claim 1, wherein said first functional electrically **conductive** layer (3) is made of a layer of fabric containing Carbon fibres, pre-impregnated with phenolic resin.

17. The multi-layer duct (D) according to claim 16, wherein the weight per unit surface area of said first functional layer (3) ranges from 250 to 400 g/m².

18. The multi-layer duct (D) according to claim 16, wherein said first functional layer (3) comprises aramid fibres and/or glass fibres.

19. The multi-layer duct (D) according to claim 1, wherein said second electrically insulating functional layer (4) is made of a layer of minimal thickness of glass fibre and/or aramid fibre tissue, pre-impregnated with phenolic resin.

20. The multi-layer duct (D) according to claim 19, wherein the weight per unit surface area of said second functional layer (4) is lower than 60 g/m².

21. The multi-layer duct (D) according to claim 1, comprising:
* a support (6) having any one shape, comprising a pair of curved flaps (10) adhering to the outer surface of the multi-layer duct (D); and
* a reinforcing layer (7) in the form of a strip surrounding the periphery of the multi-layer duct (D), at each of said curved flaps (10), wherein the outermost layer (4), the reinforcing layer (7) and the support (6) are compatible thereamong as made with the same impregnating resin system.

## Patentansprüche

1. Mehrschichtige Leitung (D) für die Luftverteilung in Klimaanlagen, insbesondere aber nicht ausschließlich für Luftfahrzeuge, hergestellt durch ein Überlappen von Schichten, umfassend:
* einen im Wesentlichen fluiddichten Polymerfilm (1), welcher die innere Wand der Leitung definiert und in Kontakt mit dem internen Luftstrom steht; und
* wenigstens eine versteifende Strukturschicht (2, 3), gebildet durch eine Folienbahn aus Strukturfasern, vorimprägniert mit wärmehärtendem Harz, welche den genannten Polymerfilm umschließt,
worin:
* wenigstens eine erste elektrisch leitfähige Funktionsschicht (3), gebildet aus einer Folienbahn, welche leitfähige Fasern umfasst, die mit wärmehärtendem Harz vorimprägniert sind; und
* wenigstens eine zweite elektrisch isolierende Funktionsschicht (4), gebildet durch eine Folienbahn, welche geeignete isolierende Funktionsfasern umfasst, die mit wärmehärtendem Harz vorimprägniert sind, welche die genannte, wenigstens eine elektrisch leitfähige funktionelle Schicht umschließt.

2. Mehrschichtige Leitung (D) gemäß Anspruch 1, worin die genannten Strukturfasern, die mit einem Harz vorimprägniert sind, Glasfasern, Reyon-Viskosefasern, Kohlenstofffasern und/oder Aramidfasern sind.

3. Mehrschichtige Leitung (D) gemäß Anspruch 1, worin die genannten elektrisch leitfähigen Funktionsfasern aus Kohlenstoff, Bor, Wolfram, Aluminiumoxid, Kupfer und/oder elektrisch leitfähigen Metallen sind.

4. Mehrschichtige Leitung (D) gemäß Anspruch 1, worin die genannten elektrisch isolierenden Fasern Glasfasern und/oder Aramidfasern sind.

5. Mehrschichtige Leitung (D) gemäß Anspruch 1, worin das genannte imprägnierende Harz ein Phenol-, Polyester-, Epoxy- und/oder Polyimid-Harz ist.

6. Mehrschichtige Leitung (D) gemäß Anspruch 5, worin das genannte imprägnierende Harz ein Phenol-Harz ist.

7. Mehrschichtige Leitung (D) gemäß Anspruch 1, worin bei dem genannten Überlappen, die Schichten (1, 2, 3, 4, 5) im Wesentlichen koaxial angeordnet sind.

8. Mehrschichtige Leitung (D) gemäß Anspruch 1, worin der genannte Polymerfilm (1) aus einem flexiblem Polymermaterial hergestellt ist.

9. Mehrschichtige Leitung (D) gemäß Anspruch 1, worin der genannte Polymerfilm (1) aus einem Polymermaterial hergestellt ist, das ausgewählt ist aus einer Gruppe, die Polyvinylfluorid (PVF), Polytetrafluorid (PTF, PTFE), Phenol- oder Polyphenol-, Polysulfon- und Polyimidmaterial umfasst.

10. Mehrschichtige Leitung (D) gemäß Anspruch 9, worin das genannte Polymermaterial ausgewählt ist aus einer Gruppe, die Polyvinylfluorid (PVF) und Polytetrafluorid (PTF, PTFE) umfasst.

11. Mehrschichtige Leitung (D) gemäß Anspruch 10, worin das genannte Polymermaterial Tedlar^{™} in einer Dicke ist, die von 15 bis 75 µm reicht.

12. Mehrschichtige Leitung (D) gemäß Anspruch 11, worin das genannte Polymermaterial in Form einer extrudierten Filmbahn mit einer Klebefläche bereitgestellt wird, welche auf die nachfolgenden Schichten gerichtet ist.

13. Mehrschichtige Leitung (D) gemäß Anspruch 12, worin die genannte Klebeschicht Polyester-basiert, Epoxybasiert oder dergleichen ist.

14. Mehrschichtige Leitung (D) gemäß Anspruch 1, worin die genannte versteifende Strukturschicht (2) ein Gewicht pro Einheit Oberflächenbereich besitzt, das von 50 bis 150 g/m² reicht.

15. Mehrschichtige Leitung (D) gemäß Anspruch 1, worin die genannte versteifende Strukturschicht (2) aus einem Vliesstoff aus Reyon-Viskosefasern in Phenolharz hergestellt ist.

16. Mehrschichtige Leitung (D) gemäß Anspruch 1, worin die genannte erste elektrisch leitfähige Funktionsschicht (3) aus einer Schicht von Gewebe hergestellt ist, welches Kohlenstofffasern enthält, die mit Phenolharz vorimprägniert sind.

17. Mehrschichtige Leitung (D) gemäß Anspruch 16, worin das Gewicht pro Oberflächeneinheit der genannten ersten Funktionsschicht (3) von 250 bis 400 g/m² reicht.

18. Mehrschichtige Leitung (D) gemäß Anspruch 16, worin die genannte erste Funktionsschicht (3) Aramidfasern und/oder Glasfasern umfasst.

19. Mehrschichtige Leitung (D) gemäß Anspruch 1, worin die genannte zweite elektrisch isolierende Funktionsschicht (4) aus einer Schicht minimaler Dicke aus Glasfaser- und/oder Aramidfasergewebe, vorimprägniert mit Phenolharz, hergestellt ist.

20. Mehrschichtige Leitung (D) gemäß Anspruch 19, worin das Gewicht pro Oberflächeneinheit der genannten zweiten Funktionsschicht (4) niedriger als 60 g/m² ist.

21. Mehrschichtiges Rohr (D) gemäß Anspruch 1, umfassend:
* einen Träger (6), der irgendeine Form besitzt, ein Paar gebogener Laschen (10), die an der äußeren Oberfläche der mehrschichtigen Leitung (D) haften; und
* eine verstärkende Schicht (7) in Form eines Streifens, welche die Peripherie des mehrschichtigen Rohrs (D) umschließt, an jedem der genannten gebogenen Laschen (10), worin die äußerste Schicht (4), die verstärkende Schicht (7) und der Träger (6) untereinander kompatibel sind, da sie mit demselben Imprägnierungssystem hergestellt sind.

## Revendications

1. Conduit multicouche (D) pour la distribution d'air dans des systèmes de climatisation, en particulier, toutefois non exclusivement, pour des aéronefs, constitué d'une superposition de couches comprenant :
* un film polymère sensiblement étanche aux fluides (1) définissant la paroi interne du conduit et en contact avec l'écoulement d'air interne ; et
* au moins une couche structurelle de raidissement (2, 3), formée d'une feuille de fibres structurelles préimprégnées d'une résine thermodurcissable, enveloppant ledit film polymère,
dans lequel :
* au moins une première couche fonctionnelle électriquement conductrice (3) est formée par une feuille comprenant des fibres conductrices préimprégnées avec une résine thermodurcissable ; et
* au moins une seconde couche fonctionnelle électriquement isolante (4) est formée par une feuille comprenant des fibres fonctionnelles isolantes appropriées, préimprégnées avec une résine thermodurcissable enveloppant ladite au moins une première couche fonctionnelle électriquement conductrice.

2. Conduit multicouche (D) selon la revendication 1, dans lequel lesdites fibres structurelles préimprégnées avec une résine sont des fibres de verre, des fibres de rayonne viscose, des fibres de carbone et/ou des fibres aramide.

3. Conduit multicouche (D) selon la revendication 1,
dans lequel lesdites fibres fonctionnelles électriquement conductrices sont des fibres de carbone, de bore, de tungstène, d'alumine, de cuivre et/ou de métaux électriquement conducteurs.

4. Conduit multicouche (D) selon la revendication 1,
dans lequel lesdites fibres électriquement isolantes sont des fibres de verre et/ou des fibres aramide.

5. Conduit multicouche (D) selon la revendication 1,
dans lequel ladite résine d'imprégnation est une résine phénolique, polyester, époxy et/ou polyimide.

6. Conduit multicouche (D) selon la revendication 5,
dans lequel ladite résine d'imprégnation est une résine phénolique.

7. Conduit multicouche (D) selon la revendication 1,
dans lequel dans ladite superposition, les couches (1, 2, 3, 4, 5) sont sensiblement agencées coaxialement.

8. Conduit multicouche (D) selon la revendication 1,
dans lequel ledit film polymère (1) est constitué d'un matériau polymère flexible.

9. Conduit multicouche (D) selon la revendication 1,
dans lequel ledit film polymère (1) est constitué d'un matériau polymère choisi dans un groupe comprenant le polyfluorure de vinyle (PVF), le polytétrafluorure (PTF, PTFE), un matériau phénolique ou polyphénolique, polysulfonique et polyimidique.

10. Conduit multicouche (D) selon la revendication 9,
dans lequel ledit matériau polymère est choisi dans un groupe comprenant le polyfluorure de vinyle (PVF) et le polytétrafluorure (PTF, PTFE).

11. Conduit multicouche (D) selon la revendication 10,
dans lequel ledit matériau polymère est le Tedlar^{™} d'une épaisseur allant de 15 à 75 µm.

12. Conduit multicouche (D) selon la revendication 11,
dans lequel ledit matériau polymère est prévu sous la forme d'une feuille extrudée avec une surface adhésive orientée face aux couches successives.

13. Conduit multicouche (D) selon la revendication 12,
dans lequel ladite couche adhésive est à base de polyester, à base d'époxy ou similaire.

14. Conduit multicouche (D) selon la revendication 1,
dans lequel ladite couche structurelle de raidissement (2) a une masse par surface unitaire allant de 50 à 150 g/m².

15. Conduit multicouche (D) selon la revendication 1,
dans lequel ladite couche structurelle de raidissement (2) est constituée d'une étoffe non tissée de fibres de rayonne viscose dans de la résine phénolique.

16. Conduit multicouche (D) selon la revendication 1,
dans lequel ladite première couche fonctionnelle électriquement conductrice (3) est constituée d'une couche d'étoffe contenant des fibres de carbone, préimprégnées avec une résine phénolique.

17. Conduit multicouche (D) selon la revendication 16,
dans lequel la masse par surface unitaire de ladite première couche fonctionnelle (3) vaut de 250 à 400 g/m².

18. Conduit multicouche (D) selon la revendication 16,
dans lequel ladite première couche fonctionnelle (3) comprend des fibres aramide et/ou des fibres de verre.

19. Conduit multicouche (D) selon la revendication 1,
dans lequel ladite seconde couche fonctionnelle électriquement isolante (4) est constituée d'une couche d'épaisseur minimale de tissu de fibre de verre et/ou de fibre aramide, préimprégnée avec une résine phénolique.

20. Conduit multicouche (D) selon la revendication 19,
dans lequel la masse par surface unitaire de ladite seconde couche fonctionnelle (4) est inférieure à 60 g/m².

21. Conduit multicouche (D) selon la revendication 1, comprenant :
* un support (6) ayant une forme quelconque, comprenant une paire de rabats incurvés (10) adhérant à la surface externe du conduit multicouche (D) ; et
* une couche de renfort (7) sous la forme d'une bande entourant la périphérie du conduit multicouche (D), au niveau de chacun desdits rabats incurvés (10), où la couche la plus externe (4), la couche de renfort (7) et le support (6) sont compatibles entre eux car préparés avec le même système de résine d'imprégnation.
